# EUROPÄISCHE PATENTSCHRIFT

(11) **EP 2 170 559 B1**
(45) Veröffentlichungstag und Bekanntmachung des Hinweises auf die Patenterteilung: **22.06.2011**
(21) Anmeldenummer: 08801061.6
(22) Anmeldetag: 28.07.2008
(51) Int. Cl.: B24D 13/12, B24D 13/02, B23F 19/00, B23F 21/00

(54) **ZAHNFLANKENPOLIERWERKZEUG UND DESSEN VERWENDUNG**
TOOTH FLANK POLISHING TOOL, AND USE THEREOF
OUTIL DE POLISSAGE DE PROFILS DE DENTS ET SON UTILISATION

(30) Priorität: 30.07.2007 DE 102007036000
(43) Veröffentlichungstag der Anmeldung: 07.04.2010
(73) Patentinhaber: Jahnel-Kestermann Getriebewerke GmbH, 44789 Bochum (DE)
(72) Erfinder: WAWRO, Horst, 44892 Bochum (DE)
(74) Vertreter: Griepenstroh, Jörg
(86) Internationale Anmeldenummer: PCT/DE2008/001221
(87) Internationale Veröffentlichungsnummer: WO 2009/015643

(56) Entgegenhaltungen:
- EP-A- 0 603 495
- BE-A2- 898 907
- CA-A- 994 105
- DE-C- 757 895
- DE-C1- 3 707 664
- GB-A- 2 141 055
- JP-A- 2002 126 993
- US-A- 2 660 009
- US-A- 3 623 275
- US-B1- 6 174 223

## Beschreibung

Die Erfindung betrifft ein Zahnflankenpolierwerkzeug und dessen Verwendung.

Ein entscheidendes Kriterium für die Qualität von Zahnrädern ist die Rauigkeit bzw. die Glattheit der Zahnflanken. Durch Schleifen lassen sich Rauigkeitswerte Ra in einem Bereich von 0,4 µm bis 1,6 µm erreichen, entsprechend Rautiefen Rt von 1,6 µm bis 6,3 µm; durch Gleitschleifen lassen sich sogar Rauigkeitswerte von Ra ≤ 0,2 µm erreichen. Zum Gleitschleifen werden die zu bearbeitenden Werkstücke zusammen mit Schleifkörpem, sogenannten Chips, und meist einem Zusatzmittel in wässriger Lösung als Schüttgut in einen Arbeitsbehälter gegeben. Durch eine oszillierende oder rotierende Bewegung des Arbeitsbehälters entsteht eine Relativbewegung zwischen Werkstück und Schleifkörper, die einen Materialabtrag am Werkstück, insbesondere an dessen Kanten, hervorruft. Durch das Gleitschleifen können sehr gute Oberflächenglätten erreicht werden.

Nachteilig am Gleitschleifen ist die relativ lange Dauer von 4 Stunden bis 24 Stunden. Zudem ist beim Gleitschleifen die Größe der zu bearbeitenden Bauteile begrenzt, da diese zusammen mit den Chips in einen Arbeitsbehälter passen müssen.

Größere Zahnräder, die sich aufgrund ihrer Dimensionen nicht zum Gleitschleifen gemäß dem zuvor beschriebenen Verfahren eignen, müssen daher manuell mit feinen Polierwerkzeugen bearbeitet werden. Nachteilig ist, dass bei manueller Bearbeitung keine gleichmäßige Oberflächengüte erreicht werden kann. Dies führt dazu, dass es Abschnitte auf den Zahnflanken mit abweichender Rauigkeit gibt, mit der Folge, dass die Tragflächenanteile unterschiedlich sind, so dass die Zahntragfähigkeit negativ beeinflusst wird. Die Gleiteigenschaften eines manuell polierten Zahnrades sind daher nicht über den gesamten Umfang gleich, so dass im Betrieb ein erhöhter Verschleiß auftreten und sich eine größere Geräuschentwicklung einstellen kann.

Ein weiteres Problem beim Arbeiten mir feinkörnigen Polierwerkzeugen ist sogenannter Schleifbrand. Schleifbrand wird erzeugt, wenn Schleifmittel mit sehr kleiner bzw. feiner Körnung verwendet werden. Der Grund hierfür ist, dass mit abnehmender Körnung der Reibbeiwert zwischen dem Schleifmittel und dem Werkstück sehr hoch wird, so dass die durch Reibung entstehende Wärme zu - Werkstoffveränderungen des Werkstücks führen kann. Das Material kann beispielsweise verspröden, was sich nachteilig auf die Lebensdauer auswirken würde.

Dokument DE 3 707 664 zeigt Zahnflankenpoliwrekzeug mit einem um eine zentrale Achse rotierbaren Grundkörper, an welchem eine in wenigstens einen Zahnzwischenraum eines zu polierenden Zahnrades einführbare Polieroberfläche befestigt ist, wobei die Polieroberfläche eine äußere Kontur aufweist, die an den Verlauf einer Zahnflanke angepasst ist, wobei die Polieroberfläche einen organischen oder synthetischen Werkstoff enthält.

Der Erfindung liegt daher die Aufgabe zugrunde, ein Zahnflankenpolierwerkzeug zu schaffen, das es ermöglicht, an insbesondere nicht durch Gleitschleifen bearbeitbaren Zahnrädern Zahnflanken mit besonders geringer Rauigkeit herzustellen, und mit dem die Nachteile manueller Polierverfahren des Standes der Technik vermieden werden können, sowie die Verwendungen für ein solches Zahnflankenpolierwerkzeug aufzuzeigen.

Die Lösung des gegenständlichen Teils der Aufgabe besteht in einem Zahnflankenpolierwerkzeug mit den Merkmalen von Patentanspruch 1. Vorteilhafte Ausführungsformen und Weiterbildungen der Erfindung gehen aus den Unteransprüchen hervor.

Mit dem Zahnflankenpolierwerkzeug werden Rauigkeitsspitzen abgetragen, das heißt, die Oberflächenstruktur der Zahnflanken wird bei äußerst geringem Werkstoffabtrag zumindest teilweise plastisch verformt und somit eingeebnet. Wesentlicher Vorteil des erfindungsgemäßen Zahnflankenpolierwerkzeugs ist, dass sich eine Zahnflanke so glatt polieren lässt, dass sie eine sehr geringe Oberflächenrauigkeit Ra aufweist, die vorzugsweise ≤ 0,4 µm, insbesondere ≤ 0,2 µm, ist. Auf diese Weise werden die Flächentraganteile und damit die Zahntragfähigkeit erhöht und die Gleiteigenschaften des Zahnrades verbessert. Die zuvor erzeugte Grundgeometrie der Verzahnung wird geometrisch nicht verändert. Die Oberflächenqualität wird verbessert. Schädigungen der Zahnflächen durch thermische Überhitzung, wie sie durch die Verwendung von feinkörnigen, nicht an die Geometrie der Zahnflanken angepasste Schleifscheiben vorkommen können, sind bei sachgerechter Handhabung zuverlässig vermeidbar. Ein wesentlicher Vorteil ist, dass das Zahnflankenpolierwerkzeug an jede Zahnradgröße angepasst ist.

Mit dem erfindungsgemäßen Zahnflankenpolierwerkzeug ist es möglich, im Durchmesser sehr große Zahnräder, d.h. solche mit einem Durchmesser größer als 1000 mm zu bearbeiten, um eine Oberfläche im Bereich der Zahnflanken zu schaffen, die beispielsweise geeignet ist, einer Graufleckigkeit vorzubeugen. Unter Graufleckigkeit versteht man eine Verschleißerscheinung oberflächennaher Bereiche hoch belasteter metallischer Bauteile, wie zum Beispiel den Zahnflanken von Zahnrädern. Die Graufleckigkeit ist mit bloßem Auge an mattgrauen Flächen zu erkennen. Ursache ist eine Vielzahl kleinster Ausbrüche und Poren, die auf Misch- und Gleitreibung und die daraus resultierende plastische Verformung oberflächennaher Bereiche zurückzuführen ist. Graufleckigkeit kann unter Umständen zu tieferen Anrissen und Ausbrüchen an den Zahnflanken führen. Ein weiterer wesentlicher Aspekt der Erfindung ist, dass sich das Zahnflankenpolierwerkzeug in einen maschinellen Prozess integrieren lässt, so dass vorgegebene Oberflächenqualitäten mit der erforderlichen geringen Streuungsbreite im Gegensatz zur manuellen Oberflächenbearbeitung gewährleistet werden können.

Gemäß einer vorteilhaften Ausführungsform ist das Poliervlies zumindest abschnittsweise flächig auf den Grundkörper aufgetragen. Beispielsweise ist das Poliervlies klebetechnisch auf dem Grundkörper befestigt.

In einer anderen Ausführungsform ist der Grundkörper flächig mit dem Poliervlies bespannt. Dies erfordert eine Klemmvorrichtung zur Befestigung des Poliervlieses. Der Vorteil des Bespannens gegenüber dem Kleben ist, dass das Poliervlies nach Bedarf ausgetauscht werden kann.

Als besonders vorteilhaft wird angesehen, wenn das Poliervlies in eine radial umfangseitige Nut oder Aufnahme des Grundkörpers eingesetzt ist. Dies ermöglicht eine besonders dauerhafte und stabile Fixierung des Poliervlieses.

Der Grundkörper und das Poliervlies zusammen können die Form einer Polierscheibe haben. Dies hat unter anderem den Vorteil, dass das Zahnflankenpolierwerkzeug in bekannte Poliermaschinen eingespannt werden kann, wie zum Beispiel Rotationstische, Wälzfräsmaschinen oder Zahnflankenschleifmaschinen. Die Bearbeitung erfolgt inkrementell, d.h. das Zahnrad wird entsprechend seiner Teilung gedreht und das Zahnradflankenpolierwerkzeug zwischen zwei Zahnflanken gebracht.

Gemäß einer weiteren Ausführungsform haben der Grundkörper und das Poliervlies zusammen die Form einer Polierwälzschnecke. Mit einer Polierwälzschnecke können die Flanken des Zahnrades in einem kontinuierlichen Prozess poliert werden. Die Polierwälzschnecke kann ebenfalls in bekannte Poliermaschinen eingespannt werden, wie zum Beispiel Rotationstische, Wälzfräsmaschinen oder Zahnflankenschleifmaschinen. Das Poliervlies bildet hierbei einen Zahn der Polierwälzschnecke bzw. einen Oberflächenbereich des Zahns. Der Zahn kann aber auch am Grundkörper ausgebildet und das Poliervlies außen auf dem Zahn befestigt sein.

Der Grundkörper und das Poliervlies können zusammen auch die Form eines Polierfingers haben. Der Polierfinger ist besonders vielseitig einsetzbar. Dieses Zahnflankenpolierwerkzeug eignet sich für Rotationstische und Wälzfräsmaschinen.

Das Zahnflankenpolierwerkzeug ist primär zum Polieren von Zahnrädern vorgesehen, wie zum Beispiel Stimzahnrädem und -ritzeln, Stirnhohlrädern, Kegelrädern und -ritzeln sowie Schneckenrädern und -wellen, insbesondere bei Durchmessern größer 1000 mm.

In vorteilhafter Weiterbildung der Erfindung ist vorgesehen, dass der Grundkörper zumindest mittelbar mit einem Schwingungserzeuger gekoppelt ist. Ein solcher Schwingungserzeuger ist dafür vorgesehen, der Rotationsbewegung des Grundkörpers eine schwingende Bewegung zu überlagern. Die Schwingungsbewegung kann in wenigstens eine Raumrichtung erfolgen, beispielsweise in Axial- oder Radialrichtung des Grundkörpers. Aber auch eine Überlagerung zweier Raumrichtungen, so dass es zu kreisförmigen oder elliptischen Bewegungen in wenigstens einer Raumebene kommt, ist im Rahmen der Erfindung möglich. Der Schwingungserzeuger kann ein Rohrschwinger oder auch Rotorschwinger sein. Insbesondere handelt es sich um einen piezoelektrischen Schwinger. Es können Longitudinalschwingungen oder Biegeschwingungen kombiniert und überlagert werden. Die Erfindung ist nicht auf die Art des Schwingungserzeugers oder die Art der Schwingungsrichtung noch auf eine bestimmte Schwingungsfrequenz beschränkt. Wesentlich ist, dass durch die zusätzliche Schwingungserzeugung ein noch besseres Polierergebnis erreichbar ist.

Grundsätzlich kann das Zahnflankenpolierwerkzeug auch zum Polieren eines Gewindes verwendet werden. Gewinde weisen eine zahnähnliche Form mit Zahnflanken auf, so dass auch diese mit dem Zahnflankenpolierwerkzeug poliert werden können.

Die Erfindung wird nachfolgend anhand von in den Figuren schematisch dargestellten Ausführungsbeispielen näher erläutert. Es zeigt:
- Figur 1: ein Zahnflankenpolierwerkzeug in Form einer Polierscheibe;
- Figur 2: ein Querschnitt durch die Polierscheibe von Figur 1 gemäß einer ersten Ausführungsform;
- Figur 3: ein Querschnitt durch die Polierscheibe von Figur 1 gemäß einer zweiten Ausführungsform;
- Figur 4: ein Zahnflankenpolierwerkzeug in Form einer Polierwälzschnecke;
- Figur 5: ein Querschnitt durch die Polierwälzschnecke von Figur 4 gemäß einer ersten Ausführungsform;
- Figur 6: ein Querschnitt durch die Polierwälzschnecke von Figur 4 gemäß einer zweiten Ausführungsform;
- Figur 7: ein Zahnflankenpolierwerk zeug in Form eines Polierfingers;
- Figur 8: ein Querschnitt durch den Polierfinger von Figur 7 gemäß einer ersten Ausführungsform und
- Figur 9: ein Querschnitt durch den Polierfinger von Figur 7 gemäß einer zweiten Ausführungsform.

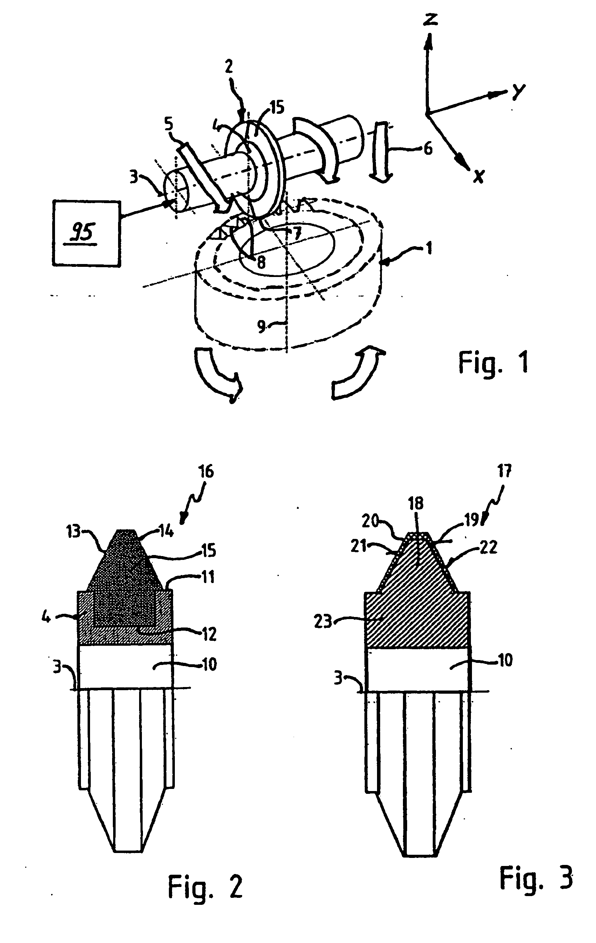

Figur 1 zeigt ein technisch vereinfacht dargestelltes Zahnrad 1 und ein Zahnflankenpolierwerkzeug 2 in Form einer Polierscheibe, die zusammen in eine nicht näher dargestellte Zahnflankenschleifmaschine eingespannt sind. Das Zahnflankenpolierwerkzeug 2 weist einen um eine zentrale Achse 3 rotierenden Grundkörper 4 auf. Die zentrale Achse 3 ist durch die Zahnflankenschleifmaschine in zwei unterschiedliche radiale Richtungen 5, 6 verfahrbar. Die Polierscheibe 2 wird mit einer definierten Winkelgeschwindigkeit angetrieben und mit einem ebenfalls definierten Anpressdruck gegen das Zahnrad 1 gedrückt. An dem Grundkörper 4 ist ein Poliervlies 15 befestigt. Das Poliervlies 15 greift in einen Zahnzwischenraum 7 des Zahnrades 1 ein und weist in dem Abschnitt, in dem es mit einer Zahnflanke 8 in Berührung kommt, eine äußere Kontur auf, die an den Verlauf der Zahnflanke 8 des Zahnrades 1 angepasst ist. Das Zahnrad 1 ist um seine Längsachse 9 rotierbar in die Zahnflankenschleifmaschine eingespannt. Mithin kann Zahnflanke 8 für Zahnflanke 8 des Zahnrads 1 poliert werden.

Figur 1 zeigt ferner einen schematisch angedeuteten Schwingungserzeuger 95, welcher mit dem Grundkörper 4 in nicht näher dargestellter Weise gekoppelt ist. Bei dem Schwingungserzeuger handelt es sich insbesondere um einen piezoelektrischen Ultraschallmotor, welcher der Rotationsbewegung des Grundkörpers 4 bzw. des Poliervlieses eine Schwingungsbewegung überlagert, die longitudinal in eine der eingezeichneten Raumrichtungen x, y, z oder jede beliebige weitere Raumrichtung weisen können. Longitudinalschwingungen können sich auch überlagern, so dass sich im Ergebnis eine Rotationsschwingung in einer beliebigen Raumebene ergibt. Die Schwingungsbewegung des Grundkörpers verbessert die Polierleistung des erfindungsgemäßen Zahnflankenpolierwerkzeugs.

In Figur 2 ist ein Querschnitt durch die Polierscheibe 16 dargestellt. Der einen inneren zylindrischen Hohlraum 10 aufweisende Grundkörper 4 ist bezüglich seiner zentralen Achse 3 rotationssymmetrisch ausgebildet und weist auf seiner radial äußeren Umfangsseite 11 eine umlaufende Nut 12 auf, in die das Poliervlies 15 eingesetzt ist. Man erkennt, dass das Poliervlies 15 an zwei Flächen 13, 14 eine äußere Kontur aufweist, die an den Verlauf von zwei benachbarten Zahnflanken 8 (vgl. Fig. 1) angepasst ist. Das Poliervlies 15 enthält einen organischen Werkstoff, wie beispielsweise Baumwolle oder Sisal.

In Figur 3 ist ein Querschnitt durch eine weitere Ausführungsform der Polierscheibe 17 dargestellt. Im Unterschied zur Polierscheibe 16 (vgl. Fig. 2) ist hier am Grundkörper 23 eine umlaufende Wulst 18 ausgebildet, auf deren radialer Außenseite 19 eine Poliervliesschicht 20 aufgetragen ist. Die Wulst 18 weist eine äußere Kontur auf, die durch zwei Flächen 21, 22 gebildet und an den Verlauf von benachbarten Zahnflanken 8 (vgl. Fig. 1) angepasst ist.

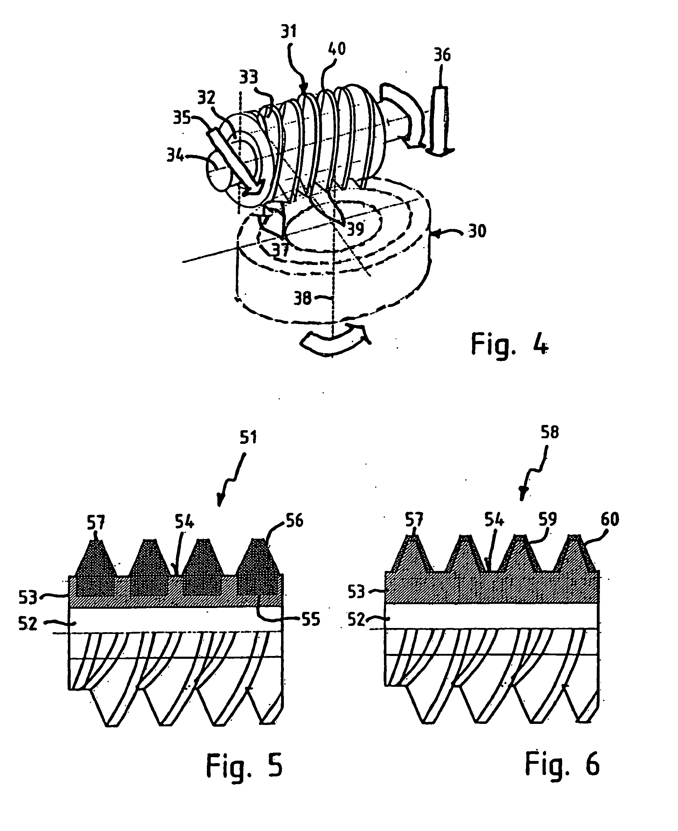

In Figur 4 sind ein schematisch dargestelltes Zahnrad 30 und ein Zahnflankenpolierwerkzeug 31 in Form einer Polierwälzschnecke dargestellt, die zusammen in eine ebenfalls nicht näher dargestellte Wälzfräsmaschine eingespannt sind. Das Zahnflankenpolierwerkzeug 31 umfasst einen Grundkörper 32 an dem wiederum ein Poliervlies 33 befestigt ist. Der Grundkörper 32 ist um seine zentrale Längsachse 34 rotierbar gelagert und kann mit der Wälzfräsmaschine in zwei unterschiedliche Richtungen 35, 36 verschoben werden. Die Polierwälzschnecke 31 wird mit einer definierten Winkelgeschwindigkeit angetrieben und mit einem ebenfalls definierten Anpressdruck gegen die Zahnflanken 37 des Zahnrads 30 gedrückt. Wie auch bei der Zahnflankenschleifmaschine gemäß Figur 1 ist das Zahnrad 30 um eine zentrale Achse 38 rotierbar in die Wälzfräsmaschine eingespannt.

Das Poliervlies 33 greift gleichzeitig in mehrere benachbarte Zahnzwischenräume 39 des Zahnrades 30 ein. Dazu weist die Polienrvälzschnecke 31 in diesem Ausführungsbeispiel einen Zahn 40 auf, der auf der radial äußeren Umfangseite des Grundkörpers 32 vorsteht und sich schraubenlinienförmig um den Grundkörper 32 windet. Die äußere Kontur des Zahns 40 ist an den Verlauf der Zahnflanken 37 angepasst, mit denen er in Kontakt steht. Gleichzeitig mit der Rotation der Polierwälzschnecke 31 wird das Zahnrad 30 um seine Längsachse 38 gedreht. Auf diese Weise können in einem kontinuierlichen Prozess alle Zahnflanken 37 poliert werden.

In Figur 5 ist ein Querschnitt durch eine Polienivälzschnecke 51 gemäß einer ersten Ausführungsform dargestellt. Man erkennt, dass der einen inneren Hohlraum 52 aufweisende Grundkörper 53 auf seiner radialen Umfangsseite 54 eine sich schraubenförmig um den Grundkörper 53 windende Nut 55 aufweist, in die das Poliervlies 56 eingesetzt ist. Das Poliervlies 56 bildet den Zahn 40 (vgl. Fig. 3) der Polierwälzschnecke 51. Das Poliervlies 56 weist außenseitig eine Kontur 57 auf, die an den Verlauf von Zahnflanken 37 (vgl. Fig. 3) angepasst ist. Das Poliervlies 56 enthält einen synthetischen Werkstoff, wie zum Beispiel Kunstharzfasern, Kunstharzwirrfasem oder Nylon.

In Figur 6 ist eine zweite Ausführungsform der Polierwälzschnecke 58 im Querschnitt dargestellt. Im Unterschied zu der vorhergehenden Ausführungsform (vgl. Fig. 4) ist der Zahn 59 am Grundkörper 53 ausgebildet und auf den Zahn 58 ist eine Poliervliesschicht 60 aufgetragen. Die Poliervliesschicht 60 ist klebetechnisch auf dem Grundkörper 53 befestigt und enthält einen mineralischen Werkstoff, wie zum Beispiel Aluminiumoxid (Al₂O₃), bevorzugt in Form von Korund.

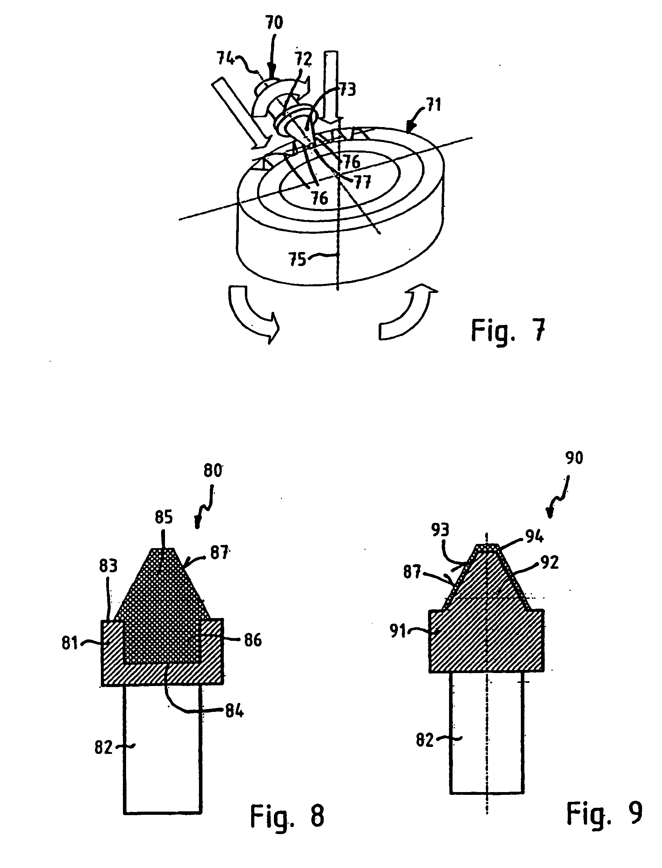

Figur 7 zeigt ein Zahnflankenpolierwerkzeug 70 in Form eines Polierfingers und ein schematisch vereinfacht dargestelltes Zahnrad 71, die zusammen in einen nicht näher dargestellten Rotationstisch eingespannt sind. Der Polierfinger 70 weist einen Grundkörper 72 auf, an dem ein Poliervlies 73 befestigt ist. Der Polierfinger 70 wird beim Polieren um seine Längsachse 74 rotiert und ist zudem in Richtung der Polierfingerlängsachse 74 und in der Zahnradlängsachse 75 verstellbar. Der Polierfinger 70 wird in einen Zahnzwischenraum 77 eingeführt und mit einem vordefinierten Anpressdruck gegen die jeweils zu polierende oder die zu polierenden Zahnflanken 76 gedrückt und in einer translatorischen Bewegung parallel zur Zahnradlängsachse 75 entlang der Oberflächen der Zahnflanken 76 geführt.

Figur 8 ist eine Querschnittsdarstellung durch einen Polierfinger 80 gemäß einer ersten Ausführungsform dargestellt. Der Polierfinger 80 weist einen Grundkörper 81 auf, an dem einstückig ein Schaft 82 ausgebildet ist. An dem dem Schaft 82 gegenüberliegenden Ende 83 ist eine Aufnahme 84 für ein Poliervlies 85 vorgesehen. In dieser Aufnahme 84 ist das Poliervlies 85 gegen Verdrehen formschlüssig gehalten. Die Grundfläche der Aufnahme 84 und des Einsteckabschnitts 86 des Poliervlieses 85 sind dazu polygonal ausgeführt. Auf seiner Außenseite weist das Poliervlies eine kegelförmige Kontur 87 auf, die an den Verlauf der Zahnflanken 76 (vgl. Fig. 7) mit denen sie in Berührung kommt, angepasst ist. Das Poliervlies 85 ist aus Nylon.

Die Ausführungsform der Figur 9 zeigt eine weitere Gestaltung des Poligerfingers 90. Im Unterschied zur Ausführungsform der Figur 8 weist der Grundkörper 91 einen Polierkegel 92 auf. Auf der Außenseite 93 des Polierkegels 92 ist eine Poliervliesschicht 94 aufgetragen. Die Poliervliesschicht 94 enthält Kunstharzwirrfasern.

Die Poliervliese 16, 51, 80 der Ausführungsformen der Figuren 2, 5 und 8 sind einteilig dargestellt. Grundsätzlich ist es auch möglich, diese Poliervliese mit einem aussteifenden Kern aus einem abweichenden Material herzustellen, wobei das Poliervlies lediglich auf der Außenseite dieses Kerns angeordnet ist.

### Bezugszeichenliste

- 1 -: Zahnrad
- 2 -: Zahnflankenpolierwerkzeug
- 3 -: zentrale Achse v. 4
- 4 -: Grundkörper
- 5 -: radiale Richtung
- 6 -: radiale Richtung
- 7 -: Zahnzwischenraum
- 8 -: Zahnflanke
- 9 -: Längsachse v. 1
- 10 -: Hohlraum
- 11 -: Umfangsseite v. 4
- 12 -: Nut
- 13 -: äußere Fläche v. 15
- 14 -: äußere Fläche v. 15
- 15 -: Poliervlies
- 16 -: Polierscheibe
- 17 -: Polierscheibe
- 18 -: Wulst
- 19 -: Außenseite v. 18
- 20 -: Poliervliesschicht
- 21 -: äußere Fläche v. 20
- 22 -: äußere Fläche v. 20
- 23 -: Grundkörper
- 30 -: Zahnrad
- 31 -: Zahnflankenpolierwerkzeug
- 32 -: Grundkörper
- 33 -: Poliervlies
- 34 -: zentrale Achse v. 32
- 35 -: radiale Richtung
- 36 -: radiale Richtung
- 37 -: Zahnflanke
- 38 -: Längsachse v. 30
- 39 -: Zahnzwischenraum
- 40 -: Zahn
- 51 -: Polierwälzschnecke
- 52 -: Hohlraum
- 53 -: Grundkörper
- 54 -: Umfangsseite v. 53
- 55 -: Nut
- 56 -: Poliervlies
- 57 -: äußere Kontur v. 56
- 58 -: Polierwälzschnecke
- 59 -: Zahn
- 60 -: Poliervliesschicht
- 70 -: Polierfinger
- 71 -: Zahnrad
- 72 -: Grundkörper
- 73 -: Poliervlies
- 74 -: Polierfingerlängsachse
- 75 -: Zahnradlängsachse
- 76 -: Zahnflanke
- 77 -: Zahnzwischenraum
- 80 -: Polierfinger
- 81 -: Grundkörper
- 82 -: Schaft
- 83 -: Ende v. 81
- 84 -: Aufnahme
- 85 -: Poliervlies
- 86 -: Einsteckabschnitt
- 87 -: Kontur
- 90 -: Polierfinger
- 91 -: Grundkörper
- 92 -: Polierkegel
- 93 -: Außenseite v. 92
- 94 -: Poliervliesschicht
- 95 -: Schwingungserzeuger

## Patentansprüche

1. Zahnflankenpolierwerkzeug mit einem um eine zentrale Achse (3, 34, 74) rotierbaren Grundkörper (4, 32, 53, 72, 81, 91), an welchem ein in wenigstens einen Zahnzwischenraum (7, 39, 77) eines zu polierenden Zahnrades (1, 30, 71) einführbares Poliervlies (15. 20, 33, 56. 60, 73, 85, 94) befestigt ist, wobei das Poliervlies (15, 20, 33, 56, 60, 73, 85, 94) zumindest abschnittsweise eine äußere Kontur (13, 14, 57, 87) aufweist, die an den Verlauf einer Zahnflanke (8, 37, 76) angepasst ist, wobei das Poliervlies (15, 20, 33, 56, 60, 73, 85, 94) einen organischen, synthetischen und/oder mineralischen Werkstoff enthält, ausgewählt aus Baumwolle oder Sisal, Kunstharzfasem, Kunstharzwirrfasern oder Nylon.

2. Zahnflankenpolierwerkzeug nach Anspruch 1, **dadurch gekennzeichnet, dass** das Poliervlies (15, 20, 33, 56, 60, 73, 85, 94) Aluminiumoxid (Al₂O₃) enthält.

3. Zahnflankenpolierwerkzeug nach Anspruche 1 oder 2, **dadurch gekennzeichnet, dass** das Poliervlies (20, 57, 94) auf den Grundkörper (23, 53, 91) zumindest abschnittsweise flächig aufgetragen ist.

4. Zahnflankenpolierwerkzeug nach Anspruch 1 oder 2, **dadurch gekennzeichnet, dass** der Grundkörper flächig mit dem Poliervlies bespannt ist.

5. Zahnflankenpolierwerkzeug nach einem der Ansprüche 1 oder 2, **dadurch gekennzeichnet, dass** das Poliervlies (15, 56, 85) in eine radiale umfangsseitige Nut (12, 55) oder eine Aufnahme (84) des Grundkörpers (4, 53, 81) eingesetzt ist.

6. Zahnflankenpolierwerkzeug nach einem der Ansprüche 1 bis 4, **dadurch gekennzeichnet, dass** der Grundkörper (4) und das Poliervlies (15) zusammen die Form einer Polierscheibe (2) haben.

7. Zahnflankenpolierwerkzeug nach einem der Ansprüche 1 bis 4, **dadurch gekennzeichnet, dass** der Grundkörper (32, 53) und das Poliervlies (33, 56, 60) zusammen die Form einer Polierwälzschnecke (31, 51, 58) haben.

8. Zahnflankenpolierwerkzeug nach Anspruch 7, **dadurch gekennzeichnet, dass** das Poliervlies (32, 56) einen Zahn (40) bildet.

9. Zahnflankenpolierwerkzeug nach einem der Ansprüche 1 bis 4, **dadurch gekennzeichnet, dass** der Grundkörper (72, 81, 91) und das Poliervlies (73, 85, 94) zusammen die Form eines Polierfingers (70, 80, 90) haben.

10. Zahnflankenpolierwerkzeug nach einem der Ansprüche 1 bis 9, **dadurch gekennzeichnet, dass** ein Schwingungserzeuger (95) zumindest mittelbar mit dem Grundkörper (4, 32, 53, 72, 81, 91) gekoppelt ist.

11. Zahnflankenpolierwerkzeug nach Anspruch 10, **dadurch gekennzeichnet, dass** die von dem Schwingungserzeuger (95) erzeugte Schwingung eine Ultraschallschwingung ist.

12. Verwendung eines Zahnflankenpolierwerkzeuges gemäß einem der vorhergehenden Ansprüche zum Polieren von Zahnflanken (8, 37, 67) eines Zahnrades (1,30,71).

13. Verwendung eines Zahnflankenpolierwerkzeuges gemäß Anspruch 12 zum Polieren von Zahnrädern (1, 30, 71) mit einem Durchmesser > 1000 mm.

14. Verwendung eines Zahnflankenpolierwerkzeuges nach Anspruch 10 oder 11, **dadurch gekennzeichnet, dass** der Rotationsbewegung des Grundkörpers (4, 32, 53, 72, 81, 91) eine schwingende Bewegung in wenigstens eine Raumrichtung mittels des Schwingungserzeugers (95) überlagert wird.

15. Verwendung eines Zahnflankenpolierwerkzeuges gemäß einem der vorhergehenden Ansprüche zum Polieren eines Gewindes.

## Claims

1. Tooth flank polishing tool, comprising a base (4, 32, 53, 72, 81, 91) which can rotate about a central axis (3, 34, 74) and to which there is attached a polishing fleece (15, 20, 33, 56, 60, 73, 85, 94) which can be introduced into at least one tooth gap (7, 39, 77) of a gear (1, 30, 71) that is to be polished, wherein at least some sections of the polishing fleece (15, 20, 33, 56, 60, 73, 85, 94) have an external contour (13, 14, 57, 87) which is adapted to the shape of a tooth flank (8, 37, 76), wherein the polishing fleece (15, 20, 33, 56, 60, 73, 85, 94) comprises an organic, synthetic and/or mineral material, selected from cotton or sisal, synthetic resin fibres, tangled synthetic resin fibres or nylon.

2. Tooth flank polishing tool according to claim 1, **characterised in that** the polishing fleece (15, 20, 33, 56, 60, 73, 85, 94) comprises aluminium oxide (Al₂O₃).

3. Tooth flank polishing tool according to claim 1 or 2, **characterised in that** the polishing fleece (20, 57, 94) is applied flat to at least some sections of the base (23, 53, 91).

4. Tooth flank polishing tool according to claim 1 or 2, **characterised in that** the base is flatly covered with the polishing fleece.

5. Tooth flank polishing tool according to one of claims 1 or 2, **characterised in that** the polishing fleece (15, 56, 85) is inserted in a radial circumferential groove (12, 55) or a recess (84) of the base (4, 53, 81).

6. Tooth flank polishing tool according to one of claims 1 to 4, **characterised in that** the base (4) and the polishing fleece (15) together have the shape of a polishing disc (2).

7. Tooth flank polishing tool according to one of claims 1 to 4, **characterised in that** the base (32, 53) and the polishing fleece (33, 56, 60) together have the shape of a polishing cylindrical worm (31, 51, 58).

8. Tooth flank polishing tool according to claim 7, **characterised in that** the polishing fleece (32, 56) forms a tooth (40).

9. Tooth flank polishing tool according to one of claims 1 to 4, **characterised in that** the base (72, 81, 91) and the polishing fleece (73, 85, 94) together have the shape of a polishing finger (70, 80, 90).

10. Tooth flank polishing tool according to one of claims 1 to 9, **characterised in that** an oscillation generator (95) is coupled at least indirectly to the base (4, 32, 53, 72, 81, 91).

11. Tooth flank polishing tool according to claim 10, **characterised in that** the oscillation generated by the oscillation generator (95) is an ultrasonic oscillation.

12. Use of a tooth flank polishing tool according to one of the preceding claims for polishing tooth flanks (8, 37, 67) of a gear (1, 30, 71).

13. Use of a tooth flank polishing tool according to claim 12 for polishing gears (1, 30, 71) having a diameter > 1000 mm.

14. Use of a tooth flank polishing tool according to claim 10 or 11, **characterised in that** the rotational movement of the base (4, 32, 53, 72, 81, 91) is superposed with an oscillating movement in at least one spatial direction by means of the oscillation generator (95).

15. Use of a tooth flank polishing tool according to one of the preceding claims for polishing a thread.

## Revendications

1. Outil de polissage de flancs de dent, comprenant un corps de base (4, 32, 53, 72, 81, 91) en rotation autour d'un axe central (3, 34, 74), sur lequel est fixé un voile de polissage (15, 20, 33, 56, 60, 73, 85, 94) susceptible d'être introduit dans au moins un intervalle interdentaire (7, 39, 77) d'un engrenage à polir (1, 30, 71), le voile de polissage (15, 20, 33, 56, 60, 73, 85, 94) présentant au moins par tronçon un contour extérieur (13, 14, 57, 87) qui est adapté au tracé d'un flanc de dent (8, 37, 76), dans lequel le voile de polissage (15, 20, 33, 56, 60, 73, 85, 94) contient un produit organique, synthétique et/ou minéral, choisi parmi le coton ou le sisal, des fibres de résine synthétique, des fibres de résine synthétique en vrac ou le nylon.

2. Outil de polissage de flancs de dent selon la revendication 1, **caractérisé en ce que** le voile de polissage (15, 20, 33, 56, 60, 73, 85, 94) contient de l'oxyde d'aluminium (Al₂O₃).

3. Outil de polissage de flancs de dent selon la revendication 1 ou 2, **caractérisé en ce que** le voile de polissage (20, 57, 94) est appliqué de manière surfacique sur le corps de base (23, 53, 91) au moins par tronçon.

4. Outil de polissage de flancs de dent selon la revendication 1 ou 2, **caractérisé en ce que** le corps de base est recouvert de manière surfacique avec le voile de polissage.

5. Outil de polissage de flancs de dent selon l'une des revendications 1 ou 2, **caractérisé en ce que** le voile de polissage (15, 56, 85) est mis en place dans une gorge radiale périphérique (12, 55) ou dans un logement (84) du corps de base (4, 53, 81).

6. Outil de polissage de flancs de dent selon l'une des revendications 1 à 4, **caractérisé en ce que** le corps de base (4) et le voile de polissage (15) ont conjointement la forme d'un disque de polissage (2).

7. Outil de polissage de flancs de dent selon l'une des revendications 1 à 4, **caractérisé en ce que** le corps de base (32, 53) et le voile de polissage (33, 56, 60) ont conjointement la forme d'une hélice de rouleau de polissage (31, 51, 58).

8. Outil de polissage de flancs de dent selon la revendication 7, **caractérisé en ce que** le voile de polissage (32, 56) forme une dent (40).

9. Outil de polissage de flancs de dent selon l'une des revendications 1 à 4, **caractérisé en ce que** le corps de base (72, 81, 91) et le voile de polissage (73, 85, 94) ont conjointement la forme d'un doigt de polissage (70, 80, 90).

10. Outil de polissage de flancs de dent selon l'une des revendications 1 à 9, **caractérisé en ce qu'**un générateur d'oscillations (95) est couplé au moins indirectement avec le corps de base (4, 32, 53, 72, 81, 91).

11. Outil de polissage de flancs de dent selon la revendication 10, **caractérisé en ce que** les oscillations engendrées par le générateur d'oscillation (95) sont des oscillations ultrasonores.

12. Utilisation d'un outil de polissage de flancs de dent selon l'une des revendications précédentes pour le polissage des flancs (8, 37, 67) de dent d'un engrenage (1, 30, 71).

13. Utilisation d'un outil de polissage de flancs de dent selon la revendication 12 pour le polissage d'engrenages (1, 30, 71) avec un diamètre supérieur à 1000 mm.

14. Utilisation d'un outil de polissage de flancs de dent selon la revendication 10 ou 11, **caractérisé en ce que** le mouvement de rotation du corps de base (4, 32, 53, 72, 81, 91) est superposé par un mouvement oscillant dans au moins une direction dans l'espace au moyen du générateur d'oscillations (95).

15. Utilisation d'un outil de polissage de flancs de dent selon l'une des revendications précédentes pour le polissage d'un pas de vis.
